# EUROPEAN PATENT APPLICATION

(11) **EP 1 091 549 A2**
(43) Date of publication of application: **11.04.2001**
(21) Application number: 00650143.1
(22) Date of filing: 06.10.2000
(51) Int. Cl.: H04M 3/533

(54) **Screen based administration of voice mail configuration**

(30) Priority: 08.10.1999 US 414896; 22.12.1999 US 469466
(71) Applicant: NORTEL NETWORKS CORPORATION, Montreal, Quebec H2Y 3Y4 (CA)
(72) Inventor: Oliver, Brian, Toronto, Ontario M4J 1K4 (CA)
(74) Representative: Coyle, Philip Aidan

(57) **Abstract**

The present invention allows end user administration of various aspects of a configuration of a voice messaging mailbox through a visual (screen-based) user interface. Such aspects may include passwords, personal distribution lists, remote notification schedules, preferences (language, message sort order, etc.) and recording of greetings. The screen-based interface for recording greetings allows control, over a data link, of a recording of an audio signal received over a voice link.

## Description

### CROSS-REFERENCE TO RELATED APPLICATION

This is a continuation-in-part of Application No. 09/414,896 filed October 8, 1999, the contents of which are incorporated by reference herein.

### FIELD OF THE INVENTION

The present invention relates to voice messaging applications and, in particular, to screen based administration of voice mail configuration.

### BACKGROUND OF THE INVENTION

Voice messaging applications serve the primary function of recording a voice message when the party for whom an incoming telephone call is intended (the voice messaging application user) does not answer the call in person. The call may not be answered by the user for a variety of reasons, including the user's telephone station apparatus being engaged in a call (busy), the user being away from the telephone station apparatus (no answer) or the user having pre-arranged that incoming calls be forwarded to the voice messaging application (call forward). A user may also record a voice message for another user of the same voice messaging application. Once recorded, the message may be addressed and sent, or saved as an unsent message for sending at a later time.

Related to the recording of messages is the function of playing the recorded messages back to the user of the voice messaging application. Voice messages for a particular user are kept in a "mailbox" (telephone set list) associated with that user. To play back voice messages, the user calls the voice messaging application, is authenticated (typically through entry of a password), and then may proceed to listen to the messages in the mailbox.

As messaging systems increase in complexity, the user is offered more features. A user may be able to set up a personal distribution list wherein a number of directory numbers, relating to other mailboxes, are stored so that a single message may be addressed to a group. Navigating through a voice messaging system typically requires responding to voice prompts that describe menus of choices. In some cases, a feature may allow a user to specify a preference for the language with which the voice prompts are spoken. Additionally, a user may be allowed to predetermine an order in which incoming messages are presented, i.e. oldest first. As users may be away from an environment (say, an office) where "message waiting" notification (like a flashing light on a phone) is programmed to appear, messaging systems may offer a "remote notification" feature. A messaging system with a remote notification feature may send a message to a pager or perhaps call a secondary telephone to indicate the presence of a new message for the user.

Administration of a typical voice mailbox requires a session performed over a telephone user interface (TUI). The user responds to voice prompts presenting menus of choices by pressing buttons on the TUI. As the number and complexity of features increases, the menus may become confusing and difficult to navigate. As a result, many users may not take advantage of, or take the time to administer, many powerful features. The assistance of an individual with familiarity with the features of a voice messaging system, such as an administrator, may allow a user to configure a mailbox, but the burden on an administrator to assist every user may be great.

There is therefore a need for an easy to use self-serve interface for the administration of the various features of a voice mailbox.

### SUMMARY OF THE INVENTION

The present invention allows administration of various aspects of a voice messaging mailbox through a visual (screen-based) user interface. Such aspects may include passwords, personal distribution lists, Remote Notification schedules, preferences (language, message sort order, etc.) and the recording of greetings.

In accordance with an aspect of the present invention there is provided a method for establishing a configuration for a voice mailbox associated with a user of a voice messaging system, the method including presenting, over a data link, a visual user interface for selecting a voice mailbox configuration, receiving indications of a selected voice mailbox configuration through the visual user interface, and recording the selected voice mailbox configuration, associated with the user. In another aspect of the invention, a configuration establishment system is provided to carry out this method. In a further aspect of the invention a software medium permits a general purpose computer to carry out the method.

In accordance with a still further aspect of the present invention there is provided a method for creating a voice recording for use in a voice messaging system, the method presenting, over a data link, a visual user interface for creating a voice recording, receiving an indication of a directory number for a telephone station apparatus, establishing a voice link to the telephone station apparatus, conducting a recording session for creating a voice recording and saving the voice recording to memory, associated with the user.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

In the figures which illustrate example embodiments of this invention:
FIG. **1** schematically illustrates a telecommunication system;
FIG. 2 illustrates, in a flow diagram, method steps followed by a mailbox administration application in an embodiment of the invention;
FIG. **3** illustrates an exemplary Login page presented in an embodiment of the invention;
FIG. **4** illustrates an exemplary Change Expired Password page presented in an embodiment of the invention;
FIG. **5** illustrates an exemplary Profile page presented in an embodiment of the invention;
FIG. **6** illustrates an exemplary Password Change page presented in an embodiment of the invention;
FIG. **7** illustrates an exemplary Preferences page presented in an embodiment of the invention;
FIG. **8** illustrates an exemplary Recordings page presented in an embodiment of the invention;
FIG. **9** illustrates an exemplary Recording Session page presented in an embodiment of the invention;
FIG. **10** illustrates, in a flow diagram, method steps followed by a mailbox administration application during a recording session in an embodiment of the invention;
FIG. **11** illustrates an exemplary Personal Distribution List page presented in an embodiment of the invention;
FIG. **12** illustrates, in a flow diagram, method steps followed by a mailbox administration application during a Personal Distribution List establishing session in an embodiment of the invention;
FIG. **13** illustrates an exemplary Remote Notification administration page presented in an embodiment of the invention;
FIG. **14** illustrates, in a flow diagram, method steps followed by a mailbox administration application during a Remote Notification administration session in an embodiment of the invention;
FIG. **15** illustrates a data structure of a configuration sending message in an embodiment of the present invention; and
FIG. **16** schematically illustrates an alternative telecommunication system to that illustrated in FIG. **1**.

### DETAILED DESCRIPTION OF THE PREFERRED EMBODIMENTS

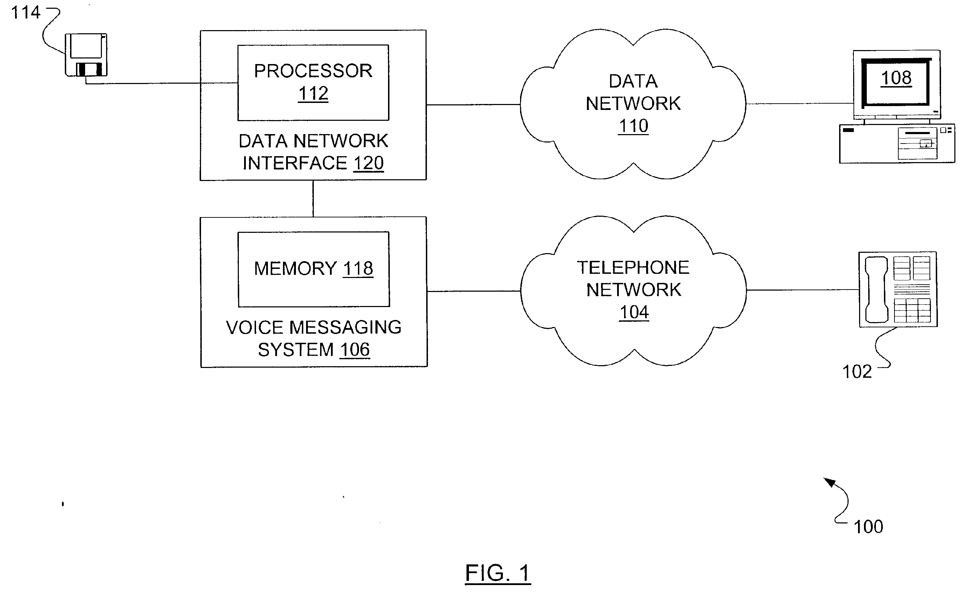

As illustrated in FIG. **1**, a telecommunication system **100** comprises a telephone station apparatus (telephone set) **102** connected to a telephone network **104**. Telephone network **104** may be, for instance, a public switched telephone network (PSTN) or a private branch exchange (PBX). Associated with telephone station apparatus **102** is a terminal **108** connected to a data network b A voice messaging system **106** is connected both to telephone network **104** and an interface **120** to data network **110**. Data network **110** may be, for instance, the Internet, a local area network (LAN) or a wide area network (WAN). Data network interface **120** may be, for instance, a HyperText Transfer Protocol (HTTP) server also known as a "web server". Data network interface **120** includes a processor **112** loaded with mailbox administration software for executing the method of this invention from software medium **114**. Software media **114** may be a disk, a tape, a chip or a random access memory containing a file downloaded from a remote source. Voice messaging system **106** includes a memory **118** (which may be a magnetic disk) for storing voice messages.

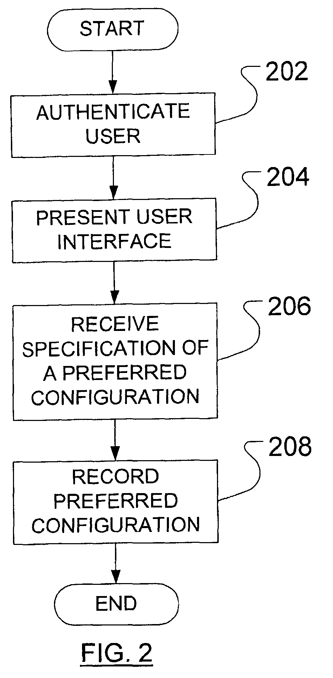

In operation and with regard to FIG. **1**, a user at telephone station apparatus **102**, wishing to define aspects of a preferred voice message mailbox configuration, employs terminal **108** to connect via data network **110** to data network interface **120**. Note that terminal **108** and telephone station apparatus **102** need not be co-located or connected in any way. Turning to FIG. **2**, the steps followed by a mailbox administration application running on data network interface **120** are shown. After authenticating the user (step **202**), the user is presented with a visual user interface (step **204**) which allows the user to administer the various features of the user's mailbox. Specifically, through the use of the interface, the user may specify such aspects of a preferred mailbox configuration as personal distribution lists (PDLs), a Remote Notification (RN) schedule, a preferred language during a Voice Messaging, a Message Sort Order, and a Mailbox Entry Point. The user-specified aspects are received (step **206**) and recorded associated with the user (step **208**). For each user of voice messaging system **106**, there may be a "cabinet" maintained in memory **118**. The cabinet may be a directory or folder in which is stored a Personal Profile and the appropriate voice messages (voice mailbox). A Personal Profile is a file that describes characteristics about the user such as mailbox number and user name as well as mailbox preferences.

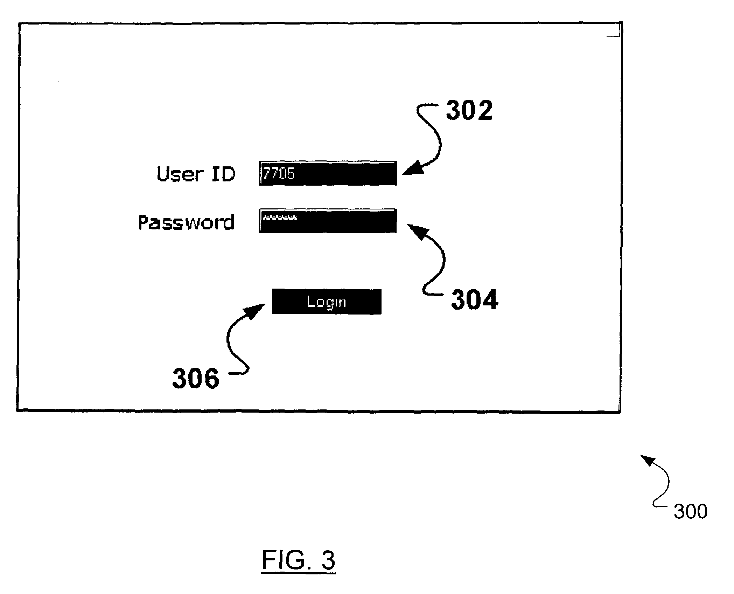

In order for a user of voice messaging system **106** to administer features of the voice messaging system, an interface to voice messaging system **106** must be provided. The interface may be termed a Personal Mailbox Administration (PMA) feature. The PMA feature is preferably implemented as a set of HyperText Markup Language (HTML) pages and data network interface **120** acts as a web server. A Uniform Resource Locator (URL) of a "mailbox login" page, specific to voice messaging system **106** and available from data network interface **120**, is provided to users of voice messaging system **106**. The URL, as is typical, includes the data network address of data network interface **120** as well as directory and file name information. A user at terminal **108** may launch a web browsing application (browser), such as Microsoft Internet Explorer^{™}, load the URL, and thereby be presented, over a data link through data network **110** (FIG. 1), with the PMA feature for specifying preferences with regard to features offered by voice messaging system **106**. Any attempt to jump into a page in the middle of the site (e.g. with a bookmark, or directly typing the URL into the browser) will result in the user being automatically redirected to a Mailbox Login page **300** (FIG. **3**).

An exemplary Mailbox Login page **300** is shown in FIG. **3**. Fields available for user entries include a Mailbox Number field **302** and a Password field **304**. In Mailbox Number field **302**, a user enters the mailbox number of the account that the user desires to administrate. In the Password field **304**, a user enters the password for the mailbox. As is typical for authentication operations such as this, translation to digits may be performed for passwords containing alphabetic characters and upper and lower case letters may be treated the same. Once the user has provided the necessary information, clicking on a Login button **306** will send a login request to the mailbox administration application on data network interface **120** (FIG. **1**). If the application accepts the login request, a Profile page is sent to the user's browser.

Note that, when validating a login request, the server may reject the request if one or more of the following conditions exist: i. The mailbox is not defined; ii. The password is incorrect; iii. Someone else is already logged into the mailbox; iv. The mailbox has been disabled; v. the number of cumulative failed login attempts has exceeded the specified threshold; vi. The mailbox password has expired. For conditions i. and ii., the user is informed that the login attempt has failed and that, before trying again, the user should verify the mailbox number and password. If one of conditions iii., iv. or v. occur, the user is notified of that condition. To resolve the situations described by iv. or v., the mailbox owner would have to contact the administrator. If the situation is, as described by vi., that the mailbox password has expired, a Change Expired Password page is displayed to the user.

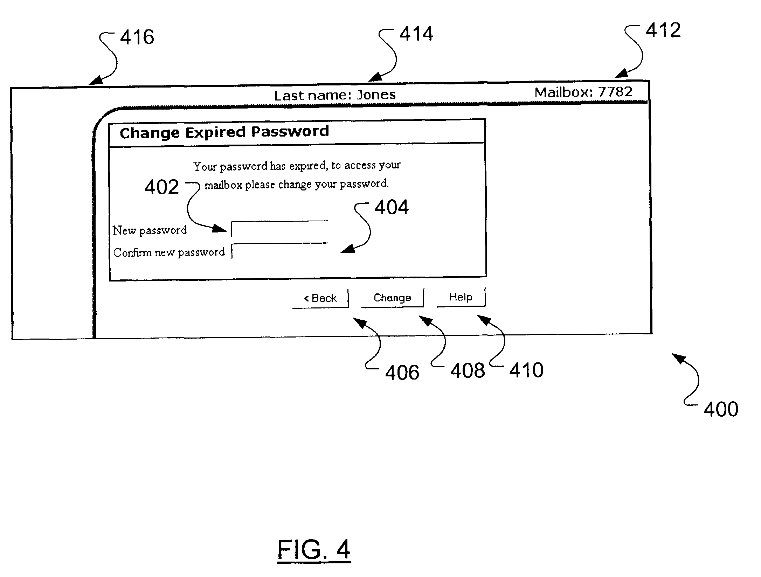

When the mailbox password has expired and a successful login has been made using the expired password, data network interface **120** (FIG. **1**) sends the web browser a Change Expired Password page **400**, illustrated in FIG. **4**, to notify the user and provide the user a facility to change password. At this point, as the user is not yet fully logged in, there is no active navigational sidebar. Change Expired Password page **400**, as illustrated, has two fields (a New Password field **402** and a Confirm New Password field **404**) and three buttons (a Change button **408**, a Back button **406** and a Help button **410**). In New Password field **402**, the user enters a new password. In Confirm New Password field **404**, the user re-enters the new password, so mistakes in the typing of an intended new password are eliminated. Change button **408** is clicked to submit a change password request to the mailbox administration application. If the change password request is successful, the next page shown is the Profile page. If not, the same page is shown again, with a dialog box explaining the cause of the problem. Back button **406** is used to terminate the change expired password session. When clicked, the user is returned back to Mailbox Login page **300** (FIG. **3**) and any data in fields **402**, **404** is lost. Context sensitive help may be presented in a new browser window via Help button **410**. In this case, information is provided about how to change a mailbox password for the situation when the password has expired.

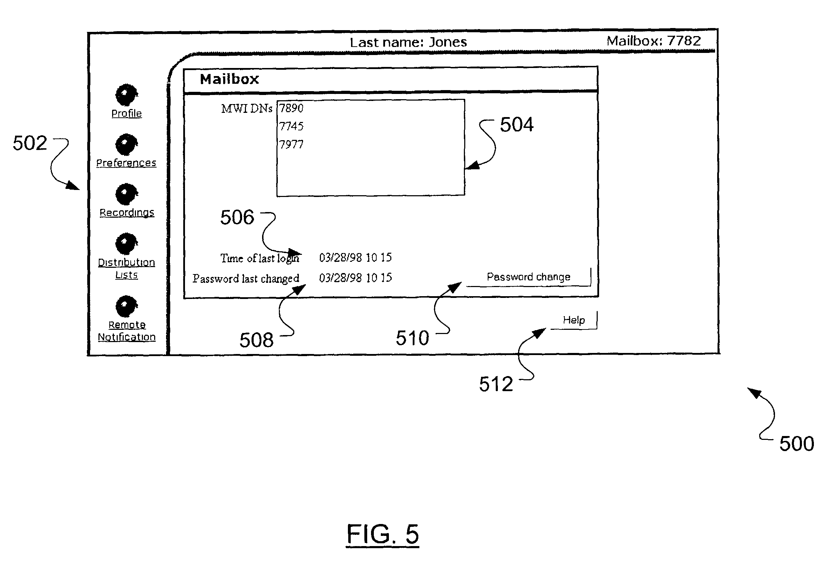

Each page found in the PMA feature has several common components that may be discussed in relation to Change Expired Password page **400**. A banner is displayed at the top of every page to provide the user with orientation information. Two fields are included in the banner. One field displays the mailbox number **412** assigned to this user, while the other field displays a name **414** of the mailbox owner, preferably the surname of the owner. A logo **416** may also be placed in the banner to identify the product associated with these pages. Turning to FIG. **5**, note that a navigational menu **502** is located along the left side of a Profile page **500**. Clicking on any one of the links or the associated button will result in that page being displayed. Links to five pages, one for each feature, are available in the menu. The pages are Profile, Preferences, Recordings, Distribution Lists and Remote Notification. Each of these items is discussed hereinafter. The last common component for each page is the help facility. Assistance for the user is provided by means of a Help button. When the Help button is clicked, context-related information is displayed in a separate browser window.

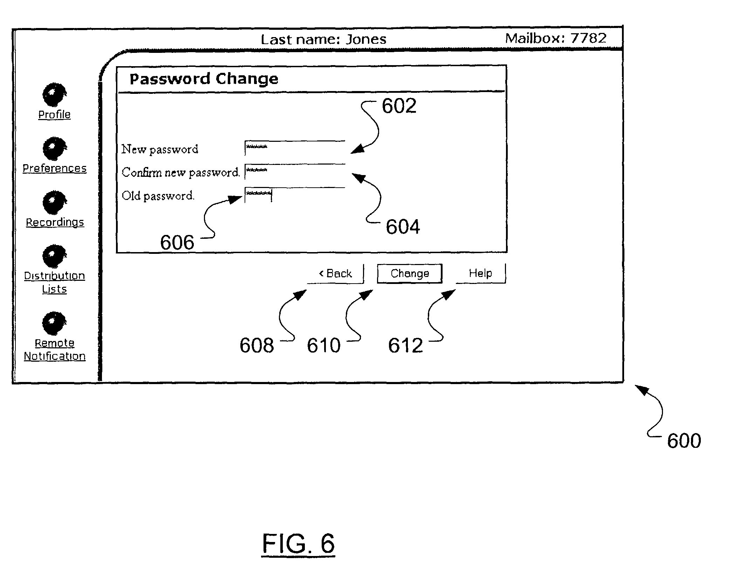

Profile page **500** provides some general information regarding a user's mailbox. An example of the appearance of Profile page **500** is illustrated in FIG. **5**. Note that the fields displayed on this page are read-only. A set of fields **504** identified by "MWIDN" maintain directory numbers (DNs) where message-waiting indications are sent when an indication event (i.e. a message is left satisfying the indication criterion) has occurred. As illustrated, there may be eight possible MWI DNs available for a mailbox. A Time of Last Logon field **506** indicates the date and time of the last login to the mailbox. A Password Last Changed field **508** indicates the date and time of the most recent change to the mailbox password. Time of Last Logon field **508** is included to allow a mailbox owner to know of a potentially compromised password. Also found on this page are two buttons (a Password Change button **510** and a Help button **512**). Clicking Password Change button **510** results in the presentation of a Password Change page **600** (see FIG. **6**) to facilitate the change of password. Context specific information for this page is provided via the Help button **512**.

As will be apparent to a person skilled in the art, additional fields that might be provided on Profile page **500**, for the information of the user, include Primary DN, Extension DNs, Storage used and Storage available.

Password Change page **600**, whose layout is illustrated in FIG. **6**, provides a mailbox password modifying facility. Three fields are used to make a change. A New Password field **602** allows the user to specify a new password. A Confirm New Password field **604** allows confirmation of the new password to eliminate mistakes in the intended new password. The user's old password is required in an Old Password field **606** provided, as a security measure, to guard against password changes being made by other than the mailbox user. It could be that the user has left their terminal unattended during an active session. Three buttons are provided on this page, a Change button **610**, a Back button **608** and a Help button **612**. When Change button **610** is clicked, a change password request is submitted to voice messaging system **106**. Back button **608** is used to terminate the change password session. When clicked, the user is returned to Profile page **500** (FIG. **5**) and any data in fields **602**, **604**, **606** is lost. Context specific information for this page is provided via Help button **612**. If the password change is successful, a notification is given to indicate this result. After notification, Back button **608** may be clicked to return the user to Profile page **500** (FIG. **5**). If there is a problem with the password change request, an error indication is given. The error condition is stated, along with more details about the problem and Password Change **600** page is re-displayed with fields populated with their problematic values. Note that modifying the mailbox password through the web interface changes the password for mailbox login from other methods of access, namely TUI access. .

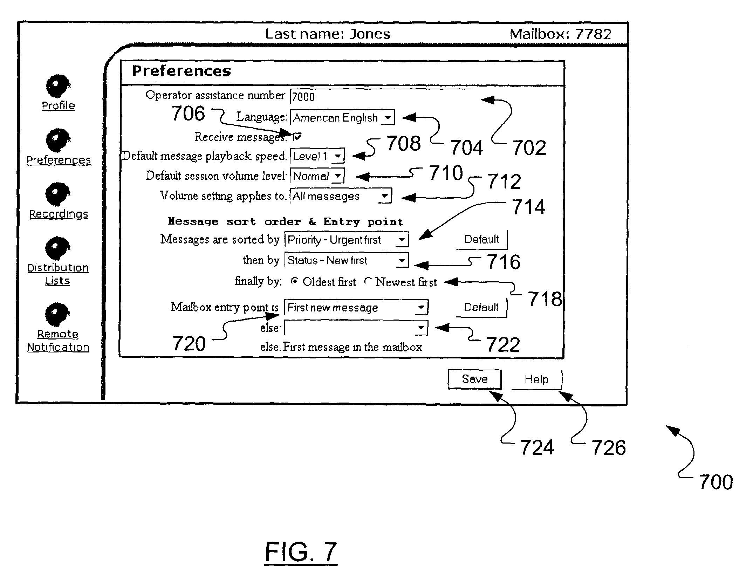

Mailbox parameters that are organised onto a Preferences page **700**, illustrated in FIG. **7**, are those that control the behaviour of interacting with the mailbox during the activities of playing messages or contacting an operator assistant. Fields that are found on Preferences page **700** include an Operator Assistance Number field **702**, a Language field **704**, a Receive Messages field **706**, a Default Message Playback Speed field **708**, a Default Session Volume Level field **710**, a Volume Setting Applies To field **712**, a Messages Are Sorted By field **714**, a Then By field **716**, a Finally By field **718**, a Mailbox Entry Point Is field **720** and an Else field **722**. The DN specified in Operator Assistance Number field **702** may also be called a "REVERT" DN and is a typical feature of voice messaging systems. Incoming calls are transferred to the REVERT DN when, during a voice messaging session, a need develops for "live" assistance. The entry in Language field **704** indicates the choice of language to be used during a voice messaging session. Receive Messages field **706** indicates the value of a binary parameter controlling whether or not voice messages are received into the mailbox. The setting specified in Default Message Playback Speed field **708** determines the default speed when playing messages during a voice messaging session. The setting specified in Default Session Volume Level field **710** determines the default volume level for playing messages during a voice messaging session. Volume Setting Applies To field **712** specifies a situation in which the default volume setting will apply. Messages Are Sorted By field **714** allows specification of an initial sort order of received voice messages. Then By field **716** and Finally By field **718** allow specification of subsequent sort order criteria. A selection in Mailbox Entry Point Is field **720** is used to specify the initial condition used in determining what is the first playable message after successful mailbox logon. Subsequent first playable message conditions are set in Else field **722**. The sort order fields **714**, **716**, **718** and entry point fields **720**, **722** are discussed in further detail in Gary Longster and Brian Oliver, "Customisable Sort and Entry for Telephone Set Lists", attorney docket number 91436-191, hereby incorporated by reference.

Buttons on page **700** include a Save button **724**, used to submit to voice message system **106** the current field values on page **700**, and a Help button **726**, used to request context specific information for this page.

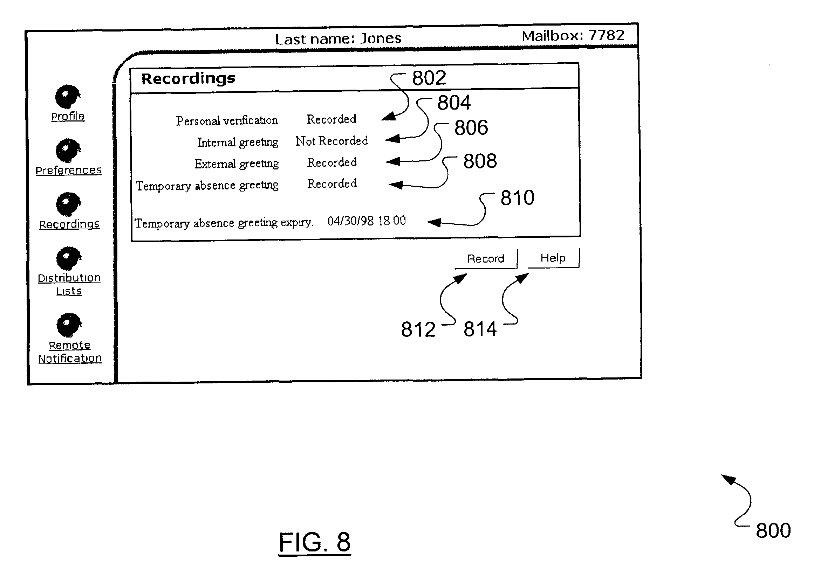

The ability to check the status of mailbox greetings or to record these greetings is facilitated by a Recordings page **800**, a possible layout for which is illustrated in FIG. **8**. Anability to set a personal verification (spoken name) for the mailbox is also available on page **800**. Fields for page **800** are read-only and include a Personal Verification field **802**, an Internal Greeting field **804**, an External Greeting field **806**, a Temporary Absence Greeting field **808** and a Temporary Absence Greeting Expiry field **810**. Personal Verification field **802** indicates whether a personal verification has been recorded for the mailbox. Internal Greeting field **804** indicates whether an internal personal greeting has been recorded. External Greeting field **806** indicates whether an external personal greeting has been recorded. Temporary Absence Greeting field **808** indicates if a temporary absence greeting has been recorded. Temporary Absence Greeting Expiry field **810** displays the date and time at which a temporary absence greeting is to expire.

The American National Standards Institute (ANSI) and the International Organisation for Standardisation (ISO) are currently considering a voice messaging specification brought forward by a Voice Messaging User Interface Forum (VMUIF). A VMUIF specification compliant Recordings page would include a Personal Greeting field, indicating whether a personal greeting has been recorded for the mailbox.

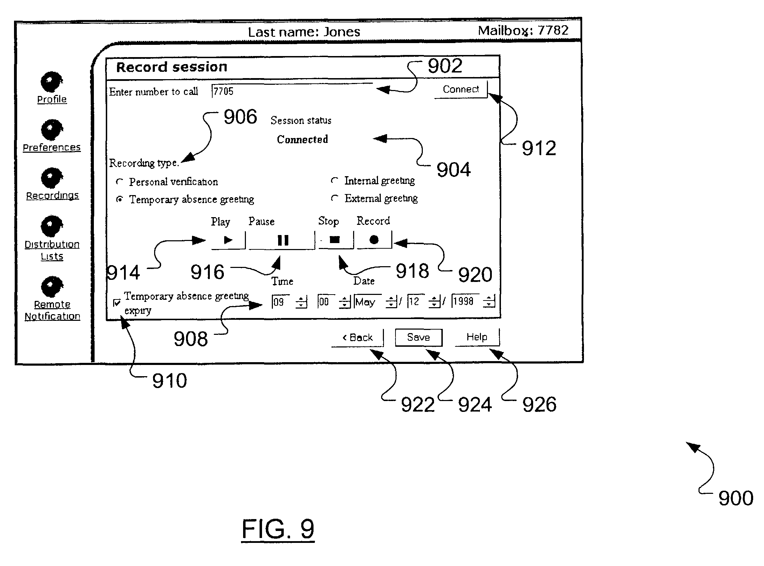

Buttons available on Recordings page **800** include a Record button **812**, for initiating a record session at a Record Session page **900** (FIG. **9**), and a Help button **814**, for seeking context specific information for this page.

The same mechanism may be used to record all five recorded items: External Greeting, Internal Greeting, Personal Greeting, Temporary Absence Greeting and Personal Verification. This mechanism may be accessed through Record Session page **900**, illustrated in FIG. **9**. Record Session page **900** is presented to the user when the user clicks on Record button **812** in Recordings page **800** (FIG. **8**). Fields on Record Session page **900** may include an Enter Number To Call field **902**, a Session Status field **904**, a Recording Type field **906** and a Temporary Absence Greeting Expiry field 908. Enter Number To Call field **902** specifies a directory number (DN) for the telephone set to be used during the recording session (i.e., this specifies the location of the source voice to be recorded). By default, this field will contain the primary DN of the mailbox. Buttons on page **900** related to a recording session include a Connect button **912**, a Record button **920**, a Play button **914**, a Stop button **918** and a Pause button **916**.

In an alternative embodiment, a telephone station apparatus may be connected to a data network and communicate with a voice messaging system using the Voice over Internet Protocol (VolP).

Session status field **904** indicates the current state of the recording session. The possibilities for current state of the recording session include "No Connection" for which buttons **914**, **916**, **918** and **920** are grey (inactive), "Connected" for which Play button **914** and Record button **920** are active while Stop button **918** and Pause button **916** are grey (inactive), "Playing" for which Stop button **918** and Pause button **916** are active while Play button **914** and Record button **920** are grey (inactive), "Stopped" for which Play button **914** and Record button **920** are active while Stop button **918** and Pause button **916** are grey (inactive), "Paused" for which Play button **914**, Record button **920** and Stop button **918** are active while Pause button **916** is grey (inactive) and "Recording" for which Stop button **918** and Pause button 916 are active while Play button **914** and Record button **920** are grey (inactive).

In Recording Type field **906**, a user may select one of the choices to record. The choices may include Personal Verification, Personal Greeting (for VMUIF compliance), Internal Greeting, External Greeting and Temporary Absence Greeting.

Temporary Absence Greeting Expiry field **908** indicates the date and time at which the Temporary Absence Greeting (TAG) is to expire. A check box **910** is used to control whether the expiry date and time is active. If a TAG is recorded and the expiry is not active, the TAG is used indefinitely.

Pressing Connect button **912** initiates a call from voice message system **106** (FIG. **1**) to telephone set **102** (FIG. **1**), the DN of which is specified in Enter Number To Call field **902**. Any problems in attempting to establish a connection are communicated to the user. As a result of the user pressing Record button **920**, a recorder at voice message system **106** (FIG. **1**) goes into "Recording" mode. The user can then record on telephone set **102** (FIG. **1**). This page automatically refreshes every five seconds to make sure the user has not yet hung up. By pressing Play button **914**, the user may hear a playback of the current recording on the telephone set **102** (FIG. **1**). Status **904** becomes "Playing" until the recording has stopped, then reverts to "Stopped". If Stop button **918** is pressed, status **904** becomes "Stopped". The user may use Stop button **918** to stop recording or playing. As there is likely to be a second or two of time lag between sending this HTTP request and the request being obeyed by voice message system **106** (FIG. **1**), a silence elimination scheme may be used by the recorder to chop off the dead air. If Pause button **916** is pressed, status **904** becomes "Paused". The user may use Pause button **916** to suspend recording or playing.

Buttons applicable to the entire screen include a Back button **922**, pressing of which causes recording to be aborted and the user to brought back to Recordings page **800** (FIG. **8**), a Save button **924**, pressing of which commits the recording to memory, and a Help button **926**, for provision of context specific information for this page.

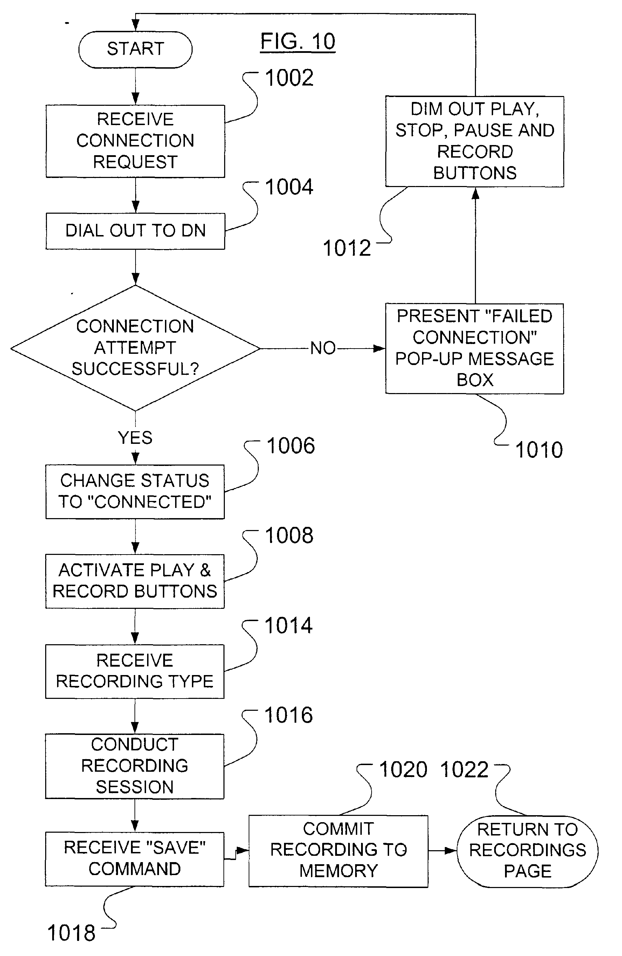

The steps followed by the mailbox administration application during a recording session are illustrated in FIG. **10**. When the user first arrives at Record Session page **900**, Session status field **904** indicates "No Connection". A connection is attempted by clicking Connect button **912**. The mailbox administration application receives the connection request (step **1002**) and dials out to connect (step **1004**) to the DN specified in Enter Number To Call field **902**, thereby establishing a voice link over telephone network **104** (FIG. **1**). If the connection attempt is successful (i.e. the user picks up a ringing telephone set), status **904** is changed (step **1006**) to "Connected" and buttons are activated (step **1008**), namely Play button **914** and Record button **920**. If a connection cannot be made (line is busy, out of service, etc.), then a pop-up message box is presented (step **1010**) that explains the failed connection and buttons **914**, **916**, **918** and **920** are dimmed out (step **1012**). Once the user closes the message box, Connect button **912** may be clicked to try again. Given a successful connection, a user selected indication of Recording Type **906** (greeting or personal verification), to record or play, is received (step **1014**). A recording session is then conducted (step **1016**) with regard to a selected recording, as the user manipulates the buttons provided (play, stop, pause, record). Once a recording has been made to the satisfaction of the user, then a click on Save button **924** is received (step **1018**) and the recording is committed to memory (step **1020**). The user is then returned to Recordings page **800** (step **1022**). Note that the audio signal recorded is received over the established voice link while the instructions (play, stop, pause, and record) are received over the data link being used to present the page.

For a Temporary Absence Greeting, fields **908** are provided to set the expiry date and time. When Save button **924** is used, the contents of expiry field **908** are sent to voice message system **106** (FIG. **1**). If the phone call to the telephone set has not yet been placed, or if the phone has not yet been picked up, then all buttons **914**, **916**, **918** and **920** are dimmed out. In this latter case, page **900** will preferably refresh itself every five seconds until a status change.

Setting up a Temporary Absence Greeting involves two steps. First, the greeting is recorded and saved. Second, the TAG expiry date and time is either enabled or disabled via checkbox **910**. If the expiry is enabled (box **910** is checked), there is a requirement to specify the date and time of expiry. This information may then be submitted to data network interface **120** (FIG. **1**) by clicking Save button **924**. A confirmation message box may be presented to the user when the TAG expiry information is successfully submitted or when any errors occur in attempting to set the expiry.

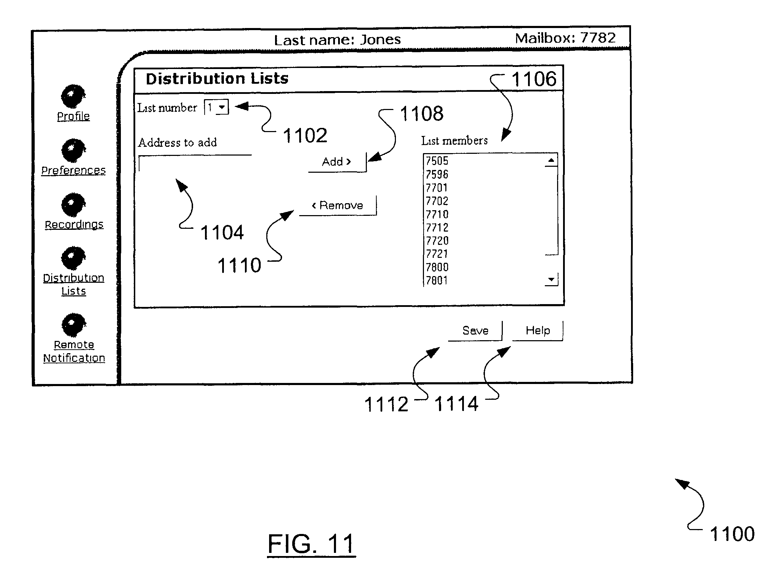

A Personal Distribution Lists page **1100**, illustrated in FIG. **11**, allows a user to add members to, and remove members from, personal distribution lists for the mailbox associated with the user. Managing PDLs through the graphic interface may be more intuitive than managing PDLs over a telephone set due to an ability to see the contents of each list at a glance. Any parameters governing PDLs managed from the telephone set are system parameters and so also apply to PDLs managed from the web interface. All personal distribution lists may be administered from the same screen. A user selects a list to be modified from a "List Number" field **1102**. Other fields include an Address To Add field **1104** and a List Members field **1106**. List Number field **1102** is a read-only field indicating the number labelling the current PDL. Address To Add field **1104** is used to specify an element, where an element could be a mailbox number or a system distribution list (SDL), to add to the current PDL. In a preferred implementation, rather than being specified as a number, an element is specified as a name, for instance, a name of a person with which the mailbox is associated or a name of a system distribution list. List Members field **1106** is a multi-select box containing the list of addresses in the current PDL. The user can select one or more of these elements to remove from the PDL.

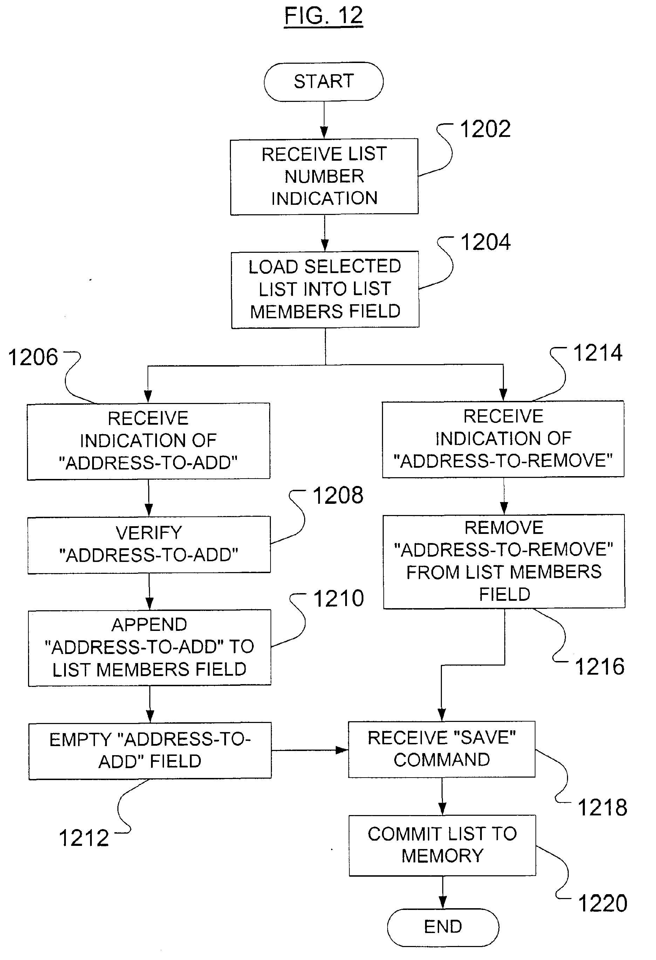

Buttons located on PDL page **1100** include an Add button **1108**, a Remove button **1110**, a Save button **1112** and a Help button 1**114**. Turning to FIG. **12**, consider the operation of mailbox administration application, running on data network interface **120**, in conjunction _ with PDL page **1100**. An indication of list number is received (step **1202**), according to a selection made by the user, and the selected list is loaded into List Members field b(step **1204**). In response to the user pressing Add button **1108**, the address in Address To Add field **1104** is received (step **1206**) and appended (step **1210**) to the current PDL contents in List Members field **1106**. Rules may apply to the adding of addresses to the lists, such as a rule that prohibits duplicate addresses from being appended to the list. Before appending the address, a verification is performed (step **1208**), to ensure that the address is syntactically valid. When an invalid address is detected in the PDL, a message box pops up listing problem entries. In addition, the submitted Address To Add is re-displayed for the user to correct. After the address is appended, Address To Add field **1104** is emptied (step **1212**). As an alternate to addition to the PDL, addresses in the current PDL the List Members field **1106** may be selected by the user for deletion. Indication of a selected addresses is received (step **1214**) by data network interface **120**. In response to the user pressing Remove button **1110**, all selected addresses in the current PDL are removed from the List Members field **1106** (step **1216**). In response the receipt (step **1218**) of a user click on Save button **1112**, the modified PDL definition is committed to memory (step **1220**). Once the list has been committed to memory, PDL page **1100** is refreshed with the updated PDL (identified in List Number field **1102**) in List Members field **1106**. Note that, a save action only applies to the list currently displayed in List Members field **1106**. Pressing Help button **1114** requests provision of context specific information for this page. Rather than, or in addition to, a List Number, a list may be associated with an alphabetic List Name. However, specifying an alphabetically named PDL via a telephone set may be cumbersome.

It is contemplated that an enhancement to Personal Distribution Lists page **1100** may take the form of a new field including existing mailbox addresses and System Personal Distribution Lists (SDLs). A user may then have an opportunity to select, from the new field, addresses and SDLs for inclusion in a given PDL. The list in the new field may be the result of a search done via a mailbox/SDL filter mechanism.

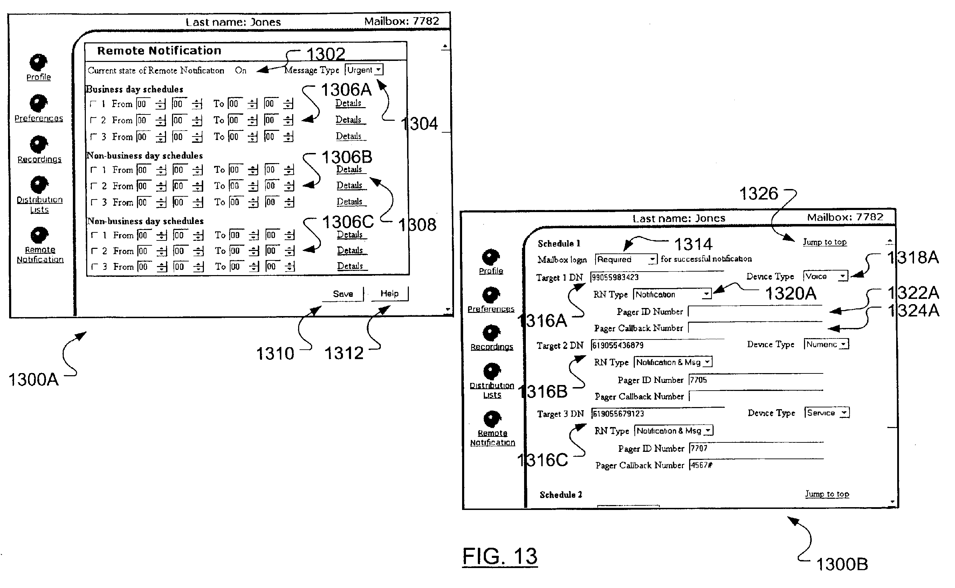

If voice messaging server **106** (FIG. **1**) has the ability to place outgoing calls, a Remote Notification feature, which uses this ability, may require an administration page. Such a Remote Notification administration page **1300** is illustrated in two parts **1300A**, **1300B** in FIG. **13**. To have access to Remote Notification, an appropriate Class of Service specification for the mailbox owner must be enabled, say, by an administrator. The fields on page part **1300A** (a Current State of Remote Notification field **1302** and a Message Type field **1304**) may be used to set schedules for Remote Notification along with the parameters that govern how the mailbox owner is notified. Current State of Remote Notification field **1302** is a read-only field controlled by the system to indicate the current status of the Remote Notification feature for the mailbox. The selection for the parameter in Message Type field **1304** informs the Remote Notification feature of the priority of message to act upon.

There are three schedules for Remote Notification, a Business Day schedule **1306A**, a Non-Business Day schedule **1306B** and a Temporary schedule **1306C**. For each named schedule, there are three time periods available. Each of these time periods consists of three fields: a field to activate or deactivate the time period; a "From" field to specify the start of the time period; and a "To" field to specify the end of the time period.

Buttons located on page part **1300A** include a Save button **1310**, used to submit to voice messing server **106** (FIG. **1**) the current field values on page **1300**, and a Help button **1312**, used to request context specific information for this page. To provide the remaining RN parameters for a particular schedule, a Details link **1308** is associated with each time period. When the user clicks on link **1308** for a given schedule, the browser jumps down to a corresponding group of fields (see page part **1300B**) that govern how notification is delivered for that particular schedule. Fields on page part **1300B**, for the first entry in Business Day Schedule **1306A**, include a Mailbox Login field **1314**, a Target 1 DN field **1316A**, a Target 2 DN field **1316B** and a Target 3 DN field **1316C**. The setting in Mailbox Login field **1314** indicates whether successfully delivered notification requires mailbox login or not. Target 1 DN **1316A**, Target 2 DN **1316B** and Target 3 DN **1316C** allow a user to indicate first, second and third DNs to which remote notification should be sent. For each Target DN there is a corresponding device to receive the notification. An exemplary Device Type field **1318A** allows the indication of a device type (voice, numeric or service) for communications device that corresponds to Target 1 DN **1316A** to which the notification may be directed. Dependent upon the selection for the device type, several other fields (a RN Type field **1320A**, a Pager Callback Number field **1322A** and a Pager ID Number field **1324A**) may be made available to a user to complete the specifications for that device. RN Type field **1320A** may be made available if the device type is voice, numeric or service. An option selected in this field stipulates the information to be sent to the device. The Pager Callback Number field **1322A** may be made available if the device type **1318A** is set to numeric or service. The data entered here is included in the information that is sent to the device. If a Callback number other than the system default is desired, then the number is given in field **1322A**. Pager ID Number field **1324A** may be made available if the device type is set to service. To identify the user, the number specified in Pager ID Number field **1324A** is provided to the paging service during notification attempts. On the first line of each schedule's details section, a link **1326** may be provided to send the user back to the schedule summary the top **1300A** of page **1300**.

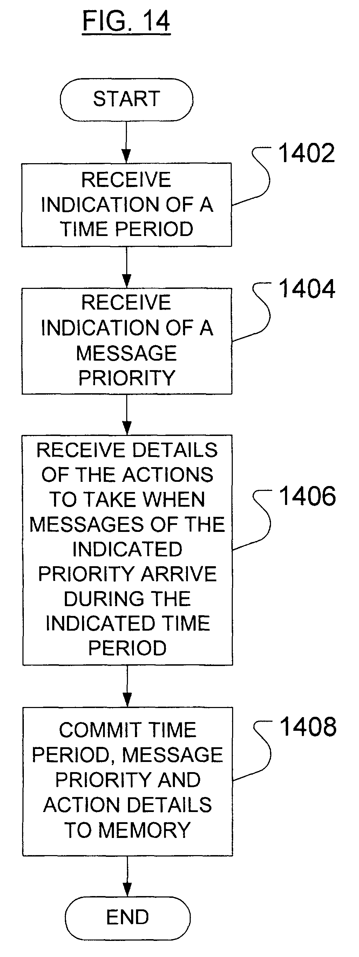

In operation, and in view of FIG. **14**, mailbox administration application running on data network interface **120** may receive (step **1402**), from a user, an indication of a first time period in a Business day schedule **1306A** to act upon. An indication of the type (priority) of messages to act upon **1304** may also be received (step **1404**). Subsequently, details **1308** of the actions to take when messages of the specified priority arrive during the specified time period may be received (step **1406**) and recorded (step **1408**).

Available on every screen of the Personal Mailbox Administration facility is a Help button to provide assistance to the user. The help facility is a document that may have hyperlinks referencing related topics where appropriate. When the Help button is clicked, a new browser window is launched containing help information in context with the current page. This browser window is preferably a minimal window, without toolbars or a menu bar. The browser window may be closed using the Close button on the window title bar. Once the Help button on a particular page is clicked, a brief introduction for that page is given followed by detailed descriptions of each field and button on the page. The descriptions for fields are sufficient enough for the user to know the purpose of the field and the effect of field values, if needed. Additionally, a summary of any limitations for each field is presented.

Although the above description relates to a single customer system, it will be apparent to a person skilled in the art that multi-customer systems may be supported with some adaptation. For instance, Mailbox Login page **300** (FIG. **3**) may include a field for specifying a customer group to which the specified mailbox belongs. Either a name or number of the customer group can be given in this field.

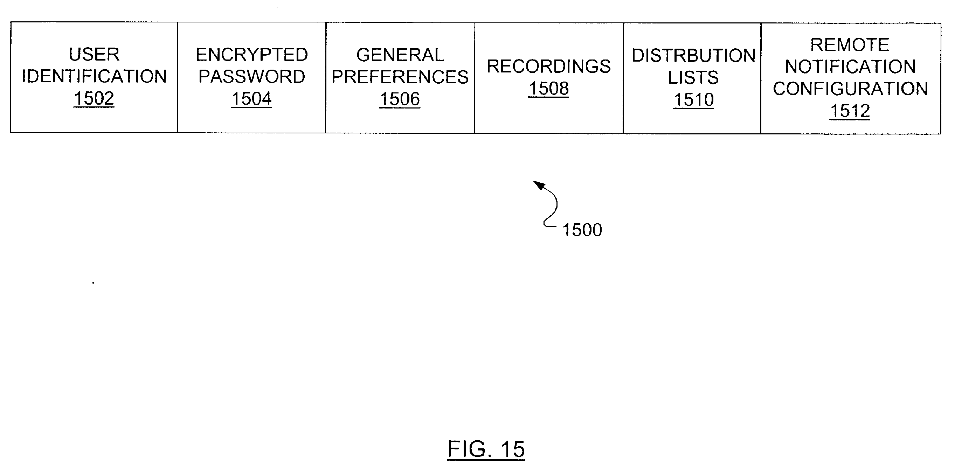

Turning to FIG. **15**, a data structure **1500** of a message for sending a specified configuration from data network interface **120** (FIG. **1**) to voice message system **106** (FIG. **1**) includes a user identification field **1502**, an encrypted password field **1504**, a general preferences field **1506**, a recordings field **1508**, a distribution list field **1510** and a remote notification configuration field **1512**, thereby allowing the voice message system **106** (FIG. **1**) to save the configuration in the Personal Profile associated with the user.

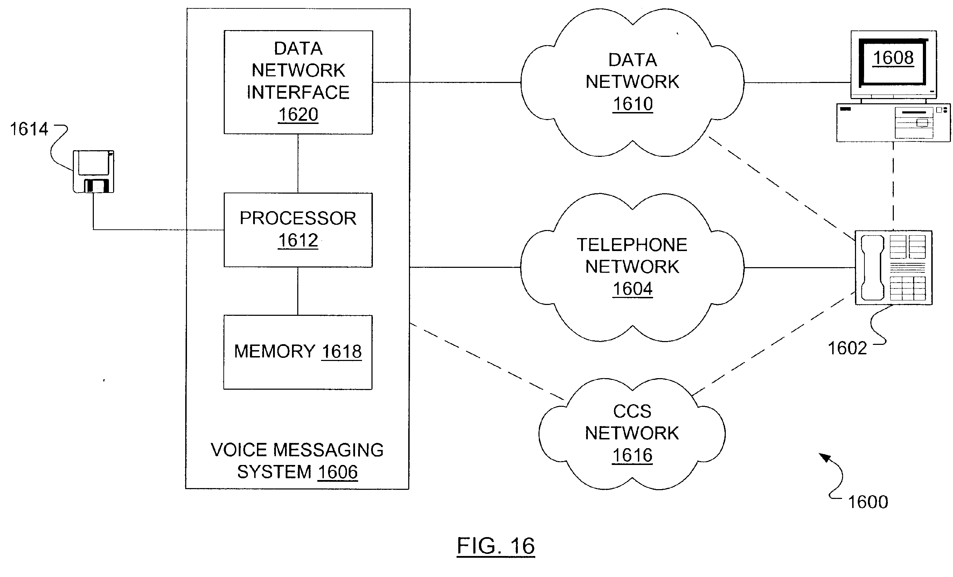

An alternative arrangement to that of FIG. **1** is illustrated in FIG. **16**. In a manner similar to telecommunication system **100**, a telecommunication system **1600** comprises a telephone station apparatus (telephone set) **1602** connected to a telephone network **1604**. Associated with telephone station apparatus **1602** is a terminal **1608** connected to a data network **1610**. An integrated voice messaging system **1606** is connected both to telephone network **1604** and to data network **1610**. Voice messaging system **1606** may be, for instance, a computer running Microsoft Windows NT^{™} as an operating system. Voice messaging system **1606** includes a processor **1612** connected to both a memory **1618**, for storing voice messages, and a data network interface **1620**, for facilitating connection of voice messaging system **1606** to data network **1610**. Processor **1612** may be loaded with criteria establishing software for executing the method of this invention from software medium **1614**. A connection may exist between voice messaging system **1606** and telephone station apparatus **1602** via common channel signaling (CCS) network **1616**. Optionally, a connection may also exist between telephone station apparatus **1602** and data network **1610**.

The operation of system **1600** of FIG. **16** is identical to that of FIG. **1** except communication for criteria establishing between telephone station apparatus **1602** and voice messaging system **1606** may take place over CCS network **1616**.

In an alternative embodiment, telephone station apparatus **1602** (FIG. **16**) may be connected to data network **1610** and communicate with voice messaging system **1606** using the Voice over Internet Protocol (VoIP).

Other modifications will be apparent to those skilled in the art and, therefore, the invention is defined in the claims.

## Claims

1. A method for establishing a configuration for a voice mailbox associated with a user of a voice messaging system, said method comprising:
presenting, over a data link, a visual user interface for selecting a voice mailbox configuration;
receiving indications of a selected voice mailbox configuration through said visual user interface; and
recording said selected voice mailbox configuration, associated with said user.

2. The method of claim 1 further comprising:
receiving an indication of a remote notification destination number through said visual user interface, said remote notification destination number for notifying said user of an arrival of a new message; and
recording said indication of said remote notification destination number, associated with said user.

3. The method of claim 2 further comprising receiving an indication of a time period during which to notify, using said remote notification destination number, said user of said arrival of said new message.

4. The method of claim 2 further comprising receiving an indication of a message priority, where said notifying said user of said arrival of said new message is limited to notifying said user of an arrival of a new message having said message priority.

5. The method of claim 2 further comprising receiving an indication of a device type to which said remote notification destination number corresponds.

6. The method of claim 1 further comprising receiving a voice recording of said user.

7. The method of claim 6 wherein said voice recording comprises a personal verification.

8. The method of claim 6 wherein said voice recording comprises an internal greeting.

9. The method of claim 6 wherein said voice recording comprises an external greeting.

10. The method of claim 6 wherein said voice recording comprises a temporary absence greeting.

11. The method of claim 6 wherein said voice recording comprises a personal greeting.

12. The method of claim 1 further comprising:
receiving, through said visual interface, an indication of an existing distribution list associated with a user to administer;
receiving an indication of an action to perform on said existing distribution list;
altering, responsive to said receiving an indication of an action, said existing distribution list to create an altered distribution list; and
recording said altered distribution list, associated with said user.

13. The method of claim 12 wherein said action comprises an addition operation and said method further comprises:
prior to said altering, receiving an indication of an element to add to said distribution list; and
wherein said altering comprises adding said received indication of an element to said distribution list.

14. The method of claim 13 wherein said element comprises a voice mailbox directory number.

15. The method of claim 13 wherein said element comprises a name associated with a voice mailbox.

16. The method of claim 13 wherein said element comprises a system distribution list comprising a plurality of indications of voice mailboxes.

17. The method of claim 12 wherein said action comprises a removal operation and said method further comprises:
prior to said altering, receiving an indication of an element to remove from said selected distribution list; and
wherein said altering comprises removing said received indication of an element from said selected distribution list.

18. The method of claim 17 wherein said element comprises a voice mailbox directory number.

19. The method of claim 17 wherein said element comprises a name associated with a voice mailbox.

20. The method of claim 17 wherein said element comprises a system distribution list comprising a plurality of indications of voice mailboxes.

21. The method of claim I further comprising sending said selected voice mailbox configuration to a voice messaging system.

22. The method of claim 1 wherein said visual user interface is graphically presented.

23. A configuration establishment system, associated with a voice messaging system, comprising:
means for presenting, over a data link, a visual user interface for selecting a voice mailbox configuration;
means for receiving indications of a selected voice mailbox configuration through said visual user interface; and
means for recording said selected voice mailbox configuration, associated with said user.

24. A configuration establishment system, associated with a voice messaging system, comprising:
a processor for presenting, over a data link, a visual user interface for selecting a voice mailbox configuration;
a receiver for receiving indications of a selected voice mailbox configuration through said visual user interface; and
a memory for recording said selected voice mailbox configuration, associated with said user.

25. A configuration establishment system, associated with a voice messaging system, operable to:
present, over a data link, a visual user interface for selecting a voice mailbox configuration;
receive indications of a selected voice mailbox configuration through said visual user interface; and
record said selected voice mailbox configuration, associated with said user.

26. A computer readable medium for providing program control to a processor, said processor included in a configuration establishment system, said computer readable medium adapting said processor to be operable to:
present, over a data link, a visual user interface for selecting a voice mailbox configuration;
receive indications of a selected voice mailbox configuration through said visual user interface; and
record said selected voice mailbox configuration, associated with said user.

27. A method for creating a voice recording for use in a voice messaging system, said method comprising:
presenting, over a data link, a visual user interface for creating a voice recording;
receiving an indication of a directory number for a telephone station apparatus;
establishing a voice link to said telephone station apparatus;
conducting a recording session for creating a voice recording; and
saving said voice recording to memory, associated with said user.

28. The method of claim 27 wherein said conducting said recording session comprises:
receiving, over said data link, an instruction to begin recording;
receiving an audio signal over said voice link; and
until receiving, over said data link, an instruction to stop recording, recording said audio signal.

29. The method of claim 27 further comprising receiving an indication of a recording type for said voice recording.

30. The method of claim 29 wherein said recording type comprises one of a personal verification, an internal greeting, an external greeting, a temporary absence greeting and a personal greeting.

31. The method of claim 30 wherein said recording type comprises said temporary absence greeting and said method further comprises receiving indication of a time period during which to use said temporary absence greeting.
